# EUROPEAN PATENT SPECIFICATION

(11) **EP 4 068 792 B1**
(45) Date of publication and mention of the grant of the patent: **03.07.2024**
(21) Application number: 22160190.9
(22) Date of filing: 19.05.2015
(51) Int. Cl.: H04N 21/41, H04N 21/436, G06F 3/048, H04N 21/482

(54) **METHOD AND DEVICE FOR TRANSMITTING DATA IN INTELLIGENT TERMINAL TO TELEVISION TERMINAL**
VERFAHREN UND VORRICHTUNG ZUR ÜBERTRAGUNG VON DATEN IN EINEM INTELLIGENTEN ENDGERÄT AN EIN FERNSEHGERÄT
PROCÉDÉ ET DISPOSITIF DE TRANSMISSION DE DONNÉES D'UN TERMINAL INTELLIGENT À UN TERMINAL DE TÉLÉVISION

(30) Priority: 22.05.2014 CN 201410219978
(43) Date of publication of application: 05.10.2022
(62) Divisional of application: 15796121.0
(73) Proprietor: Huawei Technologies Co., Ltd., Longgang District Shenzhen, Guangdong 518129 (CN)
(72) Inventor: TAN, Yin, Shenzhen, 518129 (CN)
(74) Representative: Goddar, Heinz J.

(56) References cited:
- WO-A1-2014/038226
- US-A1- 2006 004 834
- US-A1- 2006 053 450
- US-A1- 2007 244 902
- US-A1- 2011 313 775
- US-A1- 2012 113 321
- US-A1- 2013 307 785
- US-A1- 2014 095 673

## Description

### TECHNICAL FIELD

The present invention relates to the field of digital home industries, and specifically, to a method and an apparatus for transmitting data in an intelligent terminal to a television terminal.

### BACKGROUND

In the digital home industry, the popularization of intelligent terminals (for example, smartphones) and the gradual development of intelligent televisions and intelligent set top boxes lead to relatively great advancement in innovative application of triple play-oriented digital home services featuring interactive entertainment, smart household, and information services. Various services based on Internet (Over The Top, OTT) successively appear on television terminals, and some novel human-computer control manners also appear in succession. A novel and human-centered operation of using an intelligent terminal to control a television or a set top box is a typical example of the foregoing human-computer control manners.

An existing method for transmitting data (including various control commands) to a television terminal is to install an operating system, for example, install a Google TV operating system, in a set top box or a television terminal, and then equip these set top boxes or television terminals with a physical remote control having a keyboard. The physical remote control includes a baseband chip and a wireless (or Bluetooth) chip. The baseband chip is responsible for encoding a key value, and the wireless (or Bluetooth) chip is responsible for sending code of the key value to the set top box or the television terminal. On a side of the set top box or the television terminal, the wireless (or Bluetooth) chip of the physical remote control is responsible for receiving the code of the key value. A driver layer of the operating system converts the code of the key value into the key value, and then the driver layer of the operating system sends the key value to an application layer, and the application layer explains and displays the key value.

According to the foregoing prior art, data can be transmitted to the television terminal. However, because a keyboard of the physical remote control does not have an ergonomic design of a keyboard of a personal computer, an input mode is complicated, and input efficiency is low. It is either not implementable or extremely inconvenient to transmit a large volume of data (for example, a picture), and a data replication function cannot be implemented either.

US 2011/0313775 A1 discloses a computer implemented method wherein a smartphone programmed with APIs that accepts voice input is used to provide a television system with a corresponding functionality.

US 2007/244902 A1 discloses that features of both Internet video search and television-type viewing experience are combined. A user may use a remote control to enter search terms on a television monitor. A search engine may then search for video files accessible on the Internet that correspond to the search terms. Indicators of relevant search results may then be shown on the television monitor, enabling the user to select one to play. This enables the user to search for and view Internet video content in a television-like experience.

US 2014/095673 A1 discloses systems and methods for transmitting and receiving data. The method includes: a source terminal, when detecting a copy operation, storing the copied data on a clipboard, transmitting the stored data to a server, the server transmitting a push message to a target terminal, the push messaging informing the target terminal to save the data onto a clipboard, the server transmitting the data to the target terminal, the target terminal, after receiving the data, placing the data onto a local clipboard, and pasting the data from the clipboard into a designated location of an application.

### SUMMARY

The present invention provides a method of claim 1, a system of claim 8, and a television terminal of claim 15, so as to efficiently transmit data in an intelligent terminal from the intelligent terminal to a television terminal. Further embodiments are disclosed in the dependent claims.

In the present invention, because received operation instructions are varied, and operation objects of the operation instructions may also include multiple types of data such as a text, a picture, audio, or a video, after an operation object is encapsulated into a data packet of a currently used network protocol, the data packet may be transmitted to a television terminal. In one aspect, users are relatively proficient in operating increasingly popular intelligent terminals, and therefore, the method provided in the present invention is applicable to many common users and has wide application. In another aspect, unlike the prior art, an operation on an intelligent terminal does not need to be performed by touching keys one by one to enter data, and an originally relatively complicated operation can be completed by touching only one key. Therefore, according to the method provided in the present invention, not only text data can be efficiently transmitted, but also a large volume of data (for example, a picture) that cannot be transmitted in the prior art can be transmitted relatively efficiently. In a third aspect, both encapsulation and transmission of data can be compatible with an existing standard protocol, and there is no need to redevelop a protocol stack.

### BRIEF DESCRIPTION OF DRAWINGS

To describe the technical solutions in the embodiments of the present invention more clearly, the following briefly describes the accompanying drawings required for describing the embodiments or the prior art. Apparently, the accompanying drawings in the following description show merely some embodiments of the present invention, and persons of ordinary skill in the art may still derive other drawings from these accompanying drawings without creative efforts.
FIG. 1 is a schematic diagram of a basic procedure of a method for transmitting data in an intelligent terminal to a television terminal according to an embodiment of the present invention;
FIG. 2 is a schematic hierarchical diagram of an entity for executing a method for transmitting data in an intelligent terminal to a television terminal according to an embodiment of the present invention;
FIG. 3 is a schematic diagram of a basic procedure of a method for transmitting data in an intelligent terminal to a television terminal according to another embodiment of the present invention;
FIG. 4 is a schematic hierarchical diagram of an entity for executing a method for transmitting data in an intelligent terminal to a television terminal according to another embodiment of the present invention;
FIG. 5 is a schematic diagram of an input box of an application program for copying a text in an intelligent terminal to a television terminal according to an embodiment of the present invention;
FIG. 6 is a schematic diagram of an input box of an application program for copying a picture in an intelligent terminal to a television terminal outside the scope of the present invention;
FIG. 7 is a schematic diagram of a logical structure of an apparatus for transmitting data in an intelligent terminal to a television terminal according to an embodiment of the present invention;
FIG. 8 is a schematic diagram of a logical structure of an apparatus for transmitting data in an intelligent terminal to a television terminal according to another embodiment of the present invention;
FIG. 9 is a schematic diagram of a logical structure of an apparatus for transmitting data in an intelligent terminal to a television terminal according to another embodiment of the present invention; and
FIG. 10 is a schematic diagram of a logical structure of a system for transmitting data in an intelligent terminal to a television terminal according to an embodiment of the present invention.

### DESCRIPTION OF EMBODIMENTS

The present invention provides a method for transmitting data in an intelligent terminal to a television terminal, including: receiving an operation instruction of a user; encapsulating, after an operation object at which the operation instruction is targeted is obtained according to the operation instruction, the operation object into a data packet of a network protocol; and transmitting the data packet into which the operation object is encapsulated to a television terminal. Embodiments of the present invention further provide a corresponding apparatus and system for transmitting data in an intelligent terminal to a television terminal. Detailed descriptions are separately provided in the following.

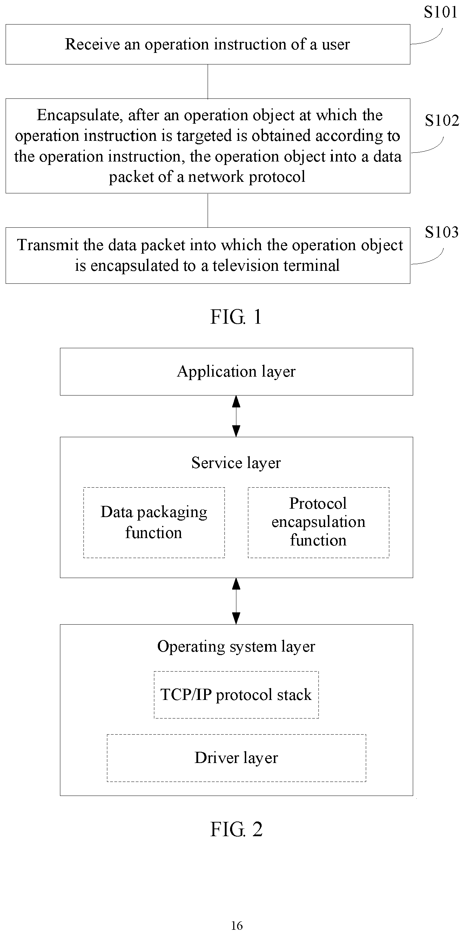

A method for transmitting data in an intelligent terminal to a television terminal in an embodiment of the present invention may be applied to an intelligent terminal such as a smartphone, and may be executed by the intelligent terminal. For a basic procedure of the method, refer to FIG. 1. The basic procedure mainly includes step S101 to step S103.

S101. Receive an operation instruction of a user.

In this embodiment of the present invention, a software entity on an intelligent terminal, that is, an entity for executing the method for transmitting data in an intelligent terminal to a television terminal provided in this embodiment of the present invention may be divided into three layers, which, as shown in FIG. 2, include an application layer, a service layer, and an operating system layer from top to bottom. The service layer is responsible for providing a related service for an upper layer of the service layer, that is, the application layer, for example, data replication. The operating system layer is an operating system of the intelligent terminal and provides various types of support such as a network service and file management and storage. The application layer shown in FIG. 2 is responsible for invoking an application programming interface (Application Programming Interface, API) of the service layer. Specifically, after receiving the operation instruction of the user, the application layer of the intelligent terminal invokes the API of the service layer, and specifies currently displayed content such as a text, an audio/video file, or a picture to the service layer.

S102. Encapsulate, after an operation object at which the operation instruction is targeted is obtained according to the operation instruction, the operation object into a data packet of a network protocol.

As mentioned above, after receiving the operation instruction of the user, the application layer of the intelligent terminal specifies the displayed content such as the text, the audio/video file, or the picture to the service layer. Generally, the object at which the operation instruction is targeted may be an application program, or may be displayed content in an application program. For example, when an icon of an application program on an intelligent terminal desktop is clicked, an object at which the operation instruction "click" is targeted is the application program. When displayed content (for example, a picture) in an application program is selected and an operation instruction "copy" is sent, an object at which the operation instruction is targeted is not the application program, but the displayed content (for example, the picture) in the application program. In this embodiment of the present invention, the operation object at which the operation instruction is targeted is displayed content in an application already started by the intelligent terminal. Although the operation instruction is targeted at the application program, the operation object is still the displayed content in the application already started by the intelligent terminal. Specifically, in this embodiment of the present invention, when the object at which the operation instruction is targeted is the application program, the operation object at which the operation instruction is targeted is limited to the displayed content in the application program. When the object at which the operation instruction is targeted is the displayed content of the application program, the displayed content in the application program is the operation object at which the operation instruction is targeted. The displayed content may be a text, an audio file, a video file, a picture, or the like. The operation instruction may be an instruction for copying the operation object to the television terminal, that is, the operation object may be copied to the television terminal after the instruction is executed. After obtaining the operation object of the operation instruction according to the operation instruction, the service layer may place data corresponding to the operation object into a preset data container.

In an embodiment of the present invention, the encapsulating the operation object into a data packet of a network protocol includes: encapsulating the operation object into a data packet of a current network protocol. For example, the currently used network protocol is the TCP/IP, the data related to the operation object may be encapsulated into a TCP/IP data packet, and the data packet may be compatible with the existing network protocol, which enhances applicability of the present invention and reduces development of a protocol stack.

In an embodiment of the present invention, the encapsulating, after an operation object of the operation instruction is obtained according to the operation instruction, the operation object into a data packet of a network protocol includes the following step S1021 and step S1022.

S1021. After the operation object of the operation instruction is obtained according to the operation instruction, place data corresponding to the operation object into a preset data container.

In this embodiment of the present invention, the data corresponding to the operation object may be placed into some known protocol packets such as a Hypertext Markup Language (HyperText Markup Language, HTML) protocol packet, and then the intelligent terminal and the television terminal use, based on a server/client (Server/Client, S/C) architecture, the HTML protocol packet for communication. However, parsing of the HTML protocol packet is quite complicated, and a C/S architecture needs to be designed, which causes relatively high costs. In an implementation manner of this embodiment of the present invention, the data corresponding to the operation object may be placed into the preset data container, where the preset data container may be a data structure that is already negotiated between the intelligent terminal and the television terminal in advance and that is used for data exchange between the two, which is shown as follows:

```
       Structure {
       command word 32 bit
       data length 64 bit
       data content type 32 bit
       content check word 128 bit
       data content n block
       }
```

The foregoing data structure is a data container provided in this embodiment of the present invention. Members of the data container include the command word (whose length is 32 bits), the data length (whose length is 64 bits), the data content type (whose length is 32 bits), the content check word (whose length is 128 bits), and the data content. The data container may include a command word member and a data content type description member, where the command word member is used to describe what the operation instruction is, for example, copying and cutting, and the data content type description member is used to describe a type of the data corresponding to the operation object, including a type such as a common text, a rich text, and a GIF picture. The data content is the data corresponding to the operation object of the operation instruction, and a length of the data content is not limited. For example, the length of the foregoing data content may be n data blocks (block), where a value of n is not limited in principle. Because the data container is preset and may be preset after the intelligent terminal performs negotiation with the television terminal, parsing is relatively simple.

S1022. Encapsulate the data container into which the data corresponding to the operation object is already placed into the data packet of the network protocol.

In this embodiment of the present invention, the data container into which the data corresponding to the operation object is already placed may be encapsulated into the data packet of the network protocol. After the data is encapsulated into the currently used network protocol, the obtained data packet may be compatible with the existing network protocol, which enhances the applicability of the present invention and reduces the development of the protocol stack. Therefore, encapsulating the data container into which the data corresponding to the operation object is already placed into the data packet of the network protocol may be encapsulating the data container into which the data corresponding to the operation object is already placed into the data packet of the currently used network protocol. Because a network protocol layer above a physical layer such as a Transmission Control Protocol (Transmission Control Protocol, TCP)/Internet Protocol (Internet Protocol, IP) layer generally uses the TCP/IP protocol, in an embodiment of the present invention, the currently used network protocol may be the TCP/IP, and the data container into which the data corresponding to the operation object is already placed may be encapsulated into a TCP/IP data packet.

S103. Transmit the data packet into which the operation object is encapsulated to a television terminal.

In this embodiment of the present invention, the data packet into which the operation object is encapsulated may be sent, by invoking a network interface, to a network port (port) negotiated with the television terminal in advance, and the data packet into which the operation object is encapsulated is transmitted to the television terminal through the port. Specifically, to transmit the data packet into which the operation object is encapsulated in step S102 to the television terminal, a wired manner may be used, for example, the intelligent terminal is directly connected to the television terminal by using a data cable, and the data packet into which the operation object is encapsulated is transmitted from the intelligent terminal to the television terminal by using the data cable; or a wireless manner may be used, for example, the data packet into which the operation object is encapsulated is transmitted from the intelligent terminal to the television terminal by means of WiFi or Bluetooth. A transmission manner may not be limited in this embodiment of the present invention.

As can be learned from the foregoing method for transmitting data in an intelligent terminal to a television terminal provided in this embodiment of the present invention, because received operation instructions are varied, and operation objects of the operation instructions may also include multiple types of data such as a text, a picture, audio, or a video, after an operation object is encapsulated into a data packet of a currently used network protocol, the data packet may be transmitted to a television terminal. In one aspect, users are relatively proficient in operating increasingly popular intelligent terminals, and therefore, the method provided in this embodiment of the present invention is applicable to many common users and has wide application. In another aspect, unlike the prior art, an operation on an intelligent terminal does not need to be performed by touching keys one by one to enter data, and an originally relatively complicated operation can be completed by touching only one key. Therefore, according to the method provided in the present invention, not only text data can be efficiently transmitted, but also a large volume of data (for example, a picture) that cannot be transmitted in the prior art can be transmitted relatively efficiently. In a third aspect, both encapsulation and transmission of data can be compatible with an existing standard protocol, and there is no need to redevelop a protocol stack.

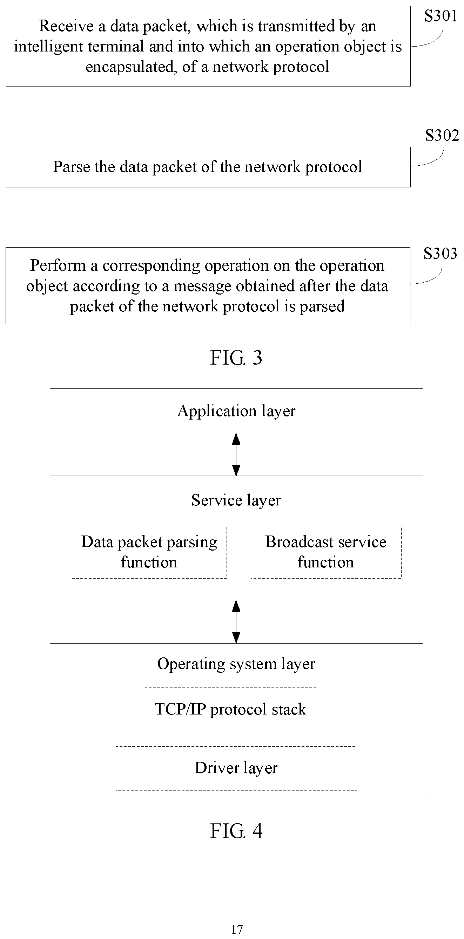

Referring to FIG. 3, a method for transmitting data in an intelligent terminal to a television terminal provided in another embodiment of the present invention may be applied to a television terminal and may be executed by the television terminal. Abasic procedure mainly includes step S301 to step S303:
S301. Receive a data packet, which is transmitted by an intelligent terminal and into which an operation object is encapsulated, of a network protocol.

The television terminal described in this embodiment of the present invention may refer to a general intelligent television terminal, or may be a set top box or a set top box + an intelligent television terminal. The television terminal is also equipped with a software entity whose hierarchical structure is similar to the hierarchical structure shown in FIG. 2. As shown in FIG. 4, a service layer is responsible for listening on a network port that is negotiated with the intelligent terminal and that is used for data exchange. Once the service layer detects data transmission by listening, the service layer receives the data packet that is transmitted by the intelligent terminal and into which the operation object is encapsulated, to perform checking, and then notifies an application layer subscribing to the service. An operating system layer is an operating system of the television terminal and provides various types of support such as a network service and file management and storage. In this embodiment of the present invention, the operation object is the same concept as the operation object in the embodiment provided in FIG. 1, and may be, for example, content such as a text, an audio file, a video file, or a picture.

S302. Parse the data packet of the network protocol.

As mentioned above, after data corresponding to the operation object is placed into a data container, the data container is encapsulated into the data packet of the network protocol such as a TCP/IP packet. After receiving the data packet of this type of network protocol, the television terminal parses the data packet of the network protocol. S303. Perform a corresponding operation on the operation object according to a message obtained after the data packet of the network protocol is parsed.

After obtaining, by parsing, a data entity in the data packet, that is, content of each member of the data container, the service layer of the software entity of the television terminal uploads a message, that is, the content of the data container member, to the application layer. In this embodiment of the present invention, the application layer of the software entity of the television terminal is mainly responsible for obtaining data transmitted by the service layer, and performing a corresponding operation on the operation object according to the message obtained after the data packet of the network protocol is parsed, so as to perform corresponding processing according to a service mode of the application layer. For example, if a current application is Notepad, the application layer directly displays, in an editing area, the data received from the service layer; if a current application is a browser, the application layer displays a received character string in an address bar or a search bar; if a current application is a picture reader, the application layer displays, on a picture reading interface, the data received from the service layer; and so on.

To further describe the method for transmitting data in an intelligent terminal to a television terminal provided in the foregoing embodiment, two application scenarios in which data in an intelligent terminal is copied to a television terminal are used as examples for description.

### Scenario 1 according to the present invention:

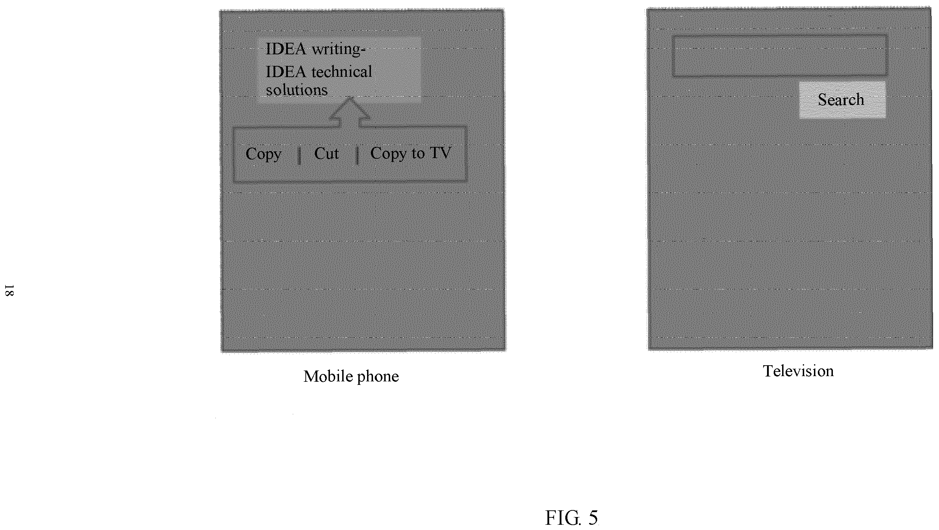

As shown in FIG. 5, on a screen of the intelligent terminal (for example, a smartphone), a user may simply select a currently observed text, and clicks a corresponding button such as a button "copy to TV", to copy the currently observed text to an input box of an application program of the television terminal. Specifically, after the user presses a key "search" on a remote control of a television, a Search dialog box appears on a user interface (User Interface, UI) of the television terminal for the user to enter content that the user wants to search for. In this case, the user may copy characters on the intelligent terminal, for example, select "IDEA writing-IDEA technical solutions", and then click the button "copy to TV". In this way, the words "IDEA writing-IDEA technical solutions" appear in an input box of the Search dialog box of the UI of the television terminal, and the user does not need to enter the foregoing text on the television terminal or by using the intelligent terminal, which can increase a speed of entering a text into the television terminal and improve user experience.

### Scenario 2 outside the scope of the present invention:

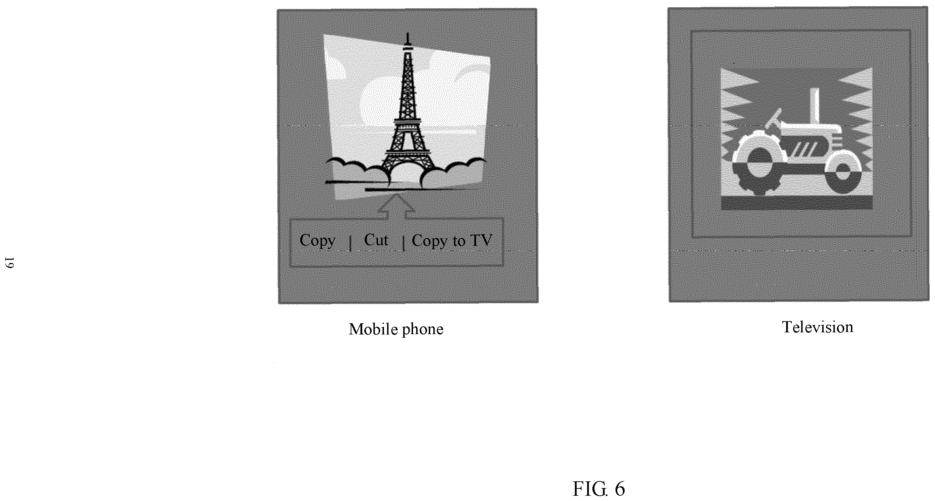

As shown in FIG. 6, there is a picture of "Eiffel Tower" on a screen of the intelligent terminal (for example, a smartphone), and there is a picture of "Bubble Car" on a UI of an application of the television terminal. A user may select a picture currently displayed on the intelligent terminal, that is, the picture of "Eiffel Tower", and click a corresponding button such as a button "copy to TV", to copy the picture to an application of the television terminal. The application of the television terminal may store or display the picture. For example, after the television terminal obtains data sent by the intelligent terminal, the picture of "Bubble Car" presented by an application on a UI is replaced with the picture of "Eiffel Tower", which greatly increases an entering speed of the user.

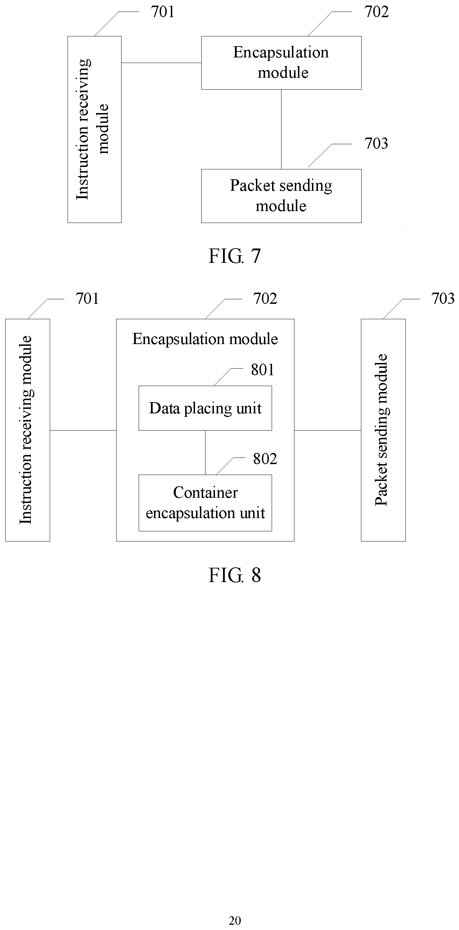

The following describes an apparatus for transmitting data in an intelligent terminal to a television terminal according to an embodiment of the present invention, and the apparatus is used to execute the foregoing method for transmitting data in an intelligent terminal to a television terminal. For a logical structure of the apparatus, refer to FIG. 7. Only a part related to this embodiment of the present invention is shown for ease of description. The apparatus for transmitting data in an intelligent terminal to a television terminal shown in FIG. 7 may be an intelligent terminal (for example, a smartphone) or a functional module in an intelligent terminal. The apparatus for transmitting data in an intelligent terminal to a television terminal shown in FIG. 7 mainly includes an instruction receiving module 701, an encapsulation module 702, and a packet sending module 703. Detailed descriptions about the modules are as follows:
The instruction receiving module 701 is configured to receive an operation instruction of a user; and
the encapsulation module 702 is configured to encapsulate, after an operation object at which the operation instruction is targeted is obtained according to the operation instruction, the operation object into a data packet of a network protocol.

In this embodiment, the operation object at which the operation instruction is targeted may be displayed content in an application, including a text, an audio file, a video file, or a picture. The operation instruction may be an instruction for copying the operation object to a television terminal, that is, the operation object may be copied to the television terminal after the instruction is executed.

The packet sending module 703 is configured to transmit the data packet into which the operation object is encapsulated to the television terminal. Specifically, the packet sending module 703 is specifically configured to send, by invoking a network interface, the data packet into which the operation object is encapsulated to a network port negotiated with the television terminal in advance.

It should be noted that division of the functional modules is only for exemplary description in the foregoing implementation manner of the apparatus for transmitting data in an intelligent terminal to a television terminal shown in FIG. 7. In an actual application, the foregoing functions may be allocated to different functional modules for completion according to a requirement such as a configuration requirement of corresponding hardware or a consideration of convenience for software implementation. That is, an internal structure of the apparatus for transmitting data in an intelligent terminal to a television terminal is divided into different functional modules to complete all or a part of the functions described above. Moreover, in an actual application, the corresponding functional modules in this embodiment may be implemented by corresponding hardware, or may be completed by corresponding hardware by executing corresponding software. For example, the foregoing instruction receiving module may be hardware with the foregoing function of receiving the operation instruction of the user, for example, an instruction receiver, or may be a general processor or another hardware device that can execute a corresponding computer program to complete the foregoing function. For another example, the foregoing encapsulation module may be a hardware with the foregoing function of encapsulating the operation object into the data packet of the network protocol after the operation object of the operation instruction is obtained according to the operation instruction, for example, an encapsulator, or may be a general processor or another hardware device that can execute a corresponding computer program to complete the foregoing function (The foregoing described principle is applicable to each embodiment provided in the specification).

The encapsulation module 702 shown in FIG. 7 may include a data placing unit 801 and a container encapsulation unit 802. As shown in FIG. 8, according to an apparatus for transmitting data in an intelligent terminal to a television terminal provided in another embodiment of the present invention,
the data placing unit 801 is configured to: after the operation object at which the operation instruction is targeted is obtained according to the operation instruction, place data corresponding to the operation object into a preset data container; and
the container encapsulation unit 802 is configured to encapsulate the data container into which the data corresponding to the operation object is already placed into the data packet of the network protocol.

In the apparatus for transmitting data in an intelligent terminal to a television terminal shown in FIG. 7, the data container includes a command word member and a data content type member, which is shown as follows:

```
       Structure
       command word 32 bit
       data length 64 bit
       data content type 32 bit
       content check word 128 bit
       data content n block
       }
```

The command word member is used to describe what the operation instruction is, for example, copying and cutting, and the data content type member is used to describe a type of the data corresponding to the operation object, including a type such as a common text, a rich text, and a GIF picture. The data content is the data corresponding to the operation object of the operation instruction, and a length of the data content is not limited. For example, the length of the foregoing data content may be n data blocks (block), where a value of n is not limited in principle. Because the data container is preset and may be preset after the intelligent terminal performs negotiation with the television terminal, parsing is extremely simple.

In this embodiment, the container encapsulation unit 802 may encapsulate the data container into which the data corresponding to the operation object is already placed into the data packet of the network protocol. After the data is encapsulated into the currently used network protocol, the obtained data packet may be compatible with the existing network protocol, which enhances the applicability of the present invention and reduces the development of the protocol stack. Therefore, that the container encapsulation unit 802 encapsulates the data container into which the data corresponding to the operation object is already placed into the data packet of the network protocol may be that the container encapsulation unit 802 encapsulates the data container into which the data corresponding to the operation object is already placed into the data packet of the currently used network protocol. Because a network protocol layer above a physical layer such as a Transmission Control Protocol (Transmission Control Protocol, TCP)/Internet Protocol (Internet Protocol, IP) layer generally uses the TCP/IP protocol, in an embodiment of the present invention, the currently used network protocol may be the TCP/IP, and the container encapsulation unit 802 may encapsulate the data container into which the data corresponding to the operation object is already placed into a TCP/IP data packet.

In the apparatus for transmitting data in an intelligent terminal to a television terminal shown in the foregoing FIG. 7 or FIG. 8, the operation instruction includes an instruction for copying the operation object to the television terminal.

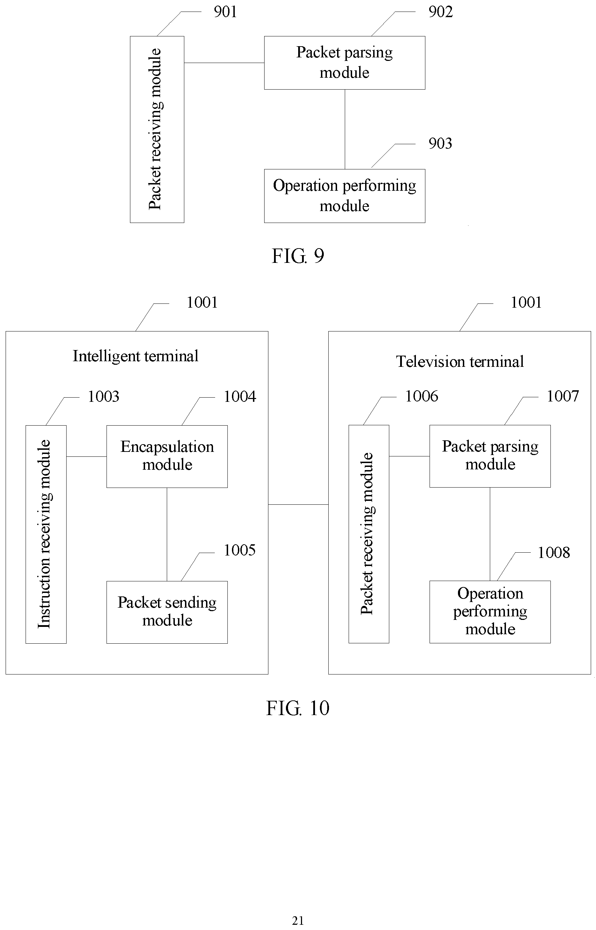

Referring to FIG. 9, FIG. 9 shows an apparatus for transmitting data in an intelligent terminal to a television terminal provided in another embodiment of the present invention. Only a part related to this embodiment of the present invention is shown for ease of description. The apparatus for transmitting data in an intelligent terminal to a television terminal shown in FIG. 9 may be a television terminal, including a common television terminal, a set top box, or a functional module in a television terminal or a set top box. The apparatus for transmitting data in an intelligent terminal to a television terminal shown in FIG. 9 mainly includes a packet receiving module 901, a packet parsing module 902, and a message sending module 903. Detailed descriptions about the modules are as follows:
The packet receiving module 901 is configured to receive a data packet, which is transmitted by an intelligent terminal and into which an operation object is encapsulated, of a network protocol;
the packet parsing module 902 is configured to parse the data packet of the network protocol; and an operation performing module 903 is configured to perform a corresponding operation on the operation object according to a message obtained after the packet parsing module 902 parses the data packet of the network protocol.

Referring to FIG. 10, FIG. 10 is a system for transmitting data in an intelligent terminal to a television terminal provided in an embodiment of the present invention. Only a part related to this embodiment of the present invention is shown for ease of description. The system for transmitting data in an intelligent terminal to a television terminal shown in FIG. 10 includes an intelligent terminal 1001 and a television terminal 1002. The intelligent terminal 1001 may be the apparatus for transmitting data in an intelligent terminal to a television terminal shown in FIG. 7 or FIG. 8, and the television terminal 1002 may be the apparatus for transmitting data in an intelligent terminal to a television terminal shown in FIG. 9. The intelligent terminal 1001 includes an instruction receiving module 1003, an encapsulation module 1004, and a sending module 1005, and the television terminal 1002 includes a packet receiving module 1006, a packet parsing module 1007, and an operation performing module 1008. Detailed descriptions about the modules are as follows:
The instruction receiving module 1003 is configured to receive an operation instruction of a user;
the encapsulation module 1004 is configured to encapsulate, after an operation object at which the operation instruction is targeted is obtained according to the operation instruction, the operation object into a data packet of a network protocol;
the packet sending module 1005 is configured to transmit the data packet into which the operation object is encapsulated to the television terminal 1002;
the packet receiving module 1006 is configured to receive the data packet, which is transmitted by the intelligent terminal 1001 and into which the operation object is encapsulated, of the network protocol;
the packet parsing module 1007 is configured to parse the data packet of the network protocol; and the operation performing module 1008 is configured to perform a corresponding operation on the operation object according to a message obtained after the packet parsing module 1007 parses the data packet of the network protocol.

An embodiment of the present invention further provides an intelligent terminal, including an input apparatus, an output apparatus, a memory, and a processor. The memory stores one or more programs, and the processor is configured to invoke the program in the memory to implement the following operations:
receiving an operation instruction of a user;
encapsulating, after an operation object at which the operation instruction is targeted is obtained according to the operation instruction, the operation object into a data packet of a network protocol; and
transmitting the data packet into which the operation object is encapsulated to a television terminal.

It is assumed that the foregoing is a first possible implementation manner, in a second possible implementation manner provided on the basis of the first possible implementation manner, the memory further includes an instruction used to perform the following operations:
after the operation object of the operation instruction is obtained according to the operation instruction, placing data corresponding to the operation object into a preset data container; and
encapsulating the data container into which the data corresponding to the operation object is already placed into the data packet of the network protocol.

It is assumed that the foregoing is a second possible implementation manner, in a third possible implementation manner provided on the basis of the second possible implementation manner, in the memory, the data container includes a command word member and a data content type description member. The command word member is used to describe the operation instruction, and the data content type member is used to describe a type of the data corresponding to the operation object.

It is assumed that the foregoing is a third possible implementation manner, in a fourth possible implementation manner provided on the basis of the first possible implementation manner, the memory further includes an instruction used to perform the following operation: sending, by invoking a network interface, the data packet into which the operation object is encapsulated to a network port negotiated with the television terminal in advance.

It is assumed that the foregoing is a fourth possible implementation manner, in a fifth possible implementation manner provided on the basis of any one of the first to the fourth possible implementation manners, in the memory, the operation instruction includes an instruction for copying the operation object to the television terminal.

An embodiment of the present invention further provides a television terminal, including an input apparatus, an output apparatus, a memory, and a processor. The memory stores one or more programs, and the processor is configured to invoke the program in the memory to implement the following operations:
receiving a data packet, which is transmitted by an intelligent terminal and into which an operation object is encapsulated, of a network protocol;
parsing the data packet of the network protocol; and
performing a corresponding operation on the operation object according to a message obtained after the data packet of the network protocol is parsed.

It should be noted that content such as information exchange between the modules/units of the apparatus and the execution processes thereof is based on the same idea as the method embodiments of the present invention, and produces the same technical effects as the method embodiments of the present invention. For the specific content, reference may be made to the description in the method embodiments of the present invention, and the details are not described herein again.

Persons of ordinary skill in the art may understand that all or a part of the steps of the methods in the embodiments may be implemented by a program instructing relevant hardware. The program may be stored in a computer readable storage medium. The storage medium may include: a read-only memory (Read-Only Memory, ROM), a random access memory (Random Access Memory, RAM), a magnetic disk, or an optical disc, and the like.

The above makes a detailed illustration on the method, the apparatus and the system for transmitting data in an intelligent terminal to a television terminal. The specific examples are applied in the text to illustrate the principles of the present invention. Furthermore, for persons of ordinary skill in the art, there will be some changes according to the ideas of the present invention.

## Claims

1. A method for transmitting data from a smartphone to a television terminal, wherein the method comprises:
receiving, by a remote control of the television terminal, a user input;
displaying, by the television terminal in response to the user input, a search dialog box on a user interface of the television terminal;
after the search dialog box is displayed on the user interface of the television terminal, receiving, by the smartphone, an operation instruction of a user, wherein an operation object at which the operation instruction is targeted is text data selected from a screen of the smartphone;
encapsulating, by the smartphone, after the operation object at which the operation instruction is targeted is obtained according to the operation instruction, the operation object into a data packet of a network protocol;
transmitting, by the smartphone, the data packet into which the operation object is encapsulated to the television terminal;
receiving, by the television terminal, the data packet from the smartphone;
parsing, by the television terminal, the data packet; and
performing, by the television terminal, a corresponding operation on the operation object according to a message obtained after the data packet is parsed;
wherein the performing, by the television terminal, the corresponding operation on the operation object according to the message obtained after the data packet is parsed comprises:
automatically displaying, by the television terminal, the text data selected from the screen of the smartphone in the search dialog box in response to receiving and parsing the data packet without receiving a user input on the television terminal for entering the text data selected from the screen of the smartphone.

2. The method according to claim 1, wherein the encapsulating, after an operation object of the operation instruction is obtained according to the operation instruction, the operation object into a data packet of a network protocol comprises:
after the operation object of the operation instruction is obtained according to the operation instruction, placing data corresponding to the operation object into a data container; and
encapsulating the data container into which the data corresponding to the operation object is already placed into the data packet of the network protocol.

3. The method according to claim 2, wherein the data container comprises a command word and a data content type description, the command word is used to describe the operation instruction, and the data content type description is used to describe a type of the data corresponding to the operation object.

4. The method according to any one of claims 1 to 3, wherein the transmitting the data packet into which the operation object is encapsulated to a television terminal comprises: sending, by invoking a network interface, the data packet into which the operation object is encapsulated to a network port negotiated with the television terminal in advance.

5. The method according to any one of claims 1 to 4, wherein the operation instruction comprises an instruction for copying the operation object to the television terminal.

6. The method according to any one of claims 1 to 5, wherein the data packet is transmitted from the smartphone to the television terminal by means of Wi-Fi or Bluetooth.

7. The method according to any one of claims 1 to 5, wherein the television terminal comprises a set top box; or the television terminal comprises a set top box and an intelligent television terminal.

8. A system for transmitting data from a smartphone to a television terminal, comprising: the smartphone and the television terminal, wherein:
the television terminal is configured to: display a search dialog box on a user interface of the television terminal;
the smartphone is configured to:
after the search dialog box is displayed on the user interface of the television terminal, receive an operation instruction of a user, wherein an operation object at which the operation instruction is targeted is text data selected from a screen of the smartphone;
encapsulate, after the operation object at which the operation instruction is targeted is obtained according to the operation instruction, the operation object into a data packet of a network protocol;
transmit the data packet into which the operation object is encapsulated to the television terminal;
wherein the television terminal is further configured to:
receive the data packet from the smartphone;
parse the data packet; and
perform a corresponding operation on the operation object according to a message obtained after the data packet is parsed;
wherein the performing the corresponding operation on the operation object according to the message obtained after the data packet is parsed comprises:
automatically displaying the text data selected from the screen of the smartphone in the search dialog box in response to receiving and parsing the data packet without receiving a user input on the television terminal for entering the text data selected from the screen of the smartphone.

9. The system according to claim 8, wherein the encapsulating, after an operation object of the operation instruction is obtained according to the operation instruction, the operation object into a data packet of a network protocol comprises:
after the operation object of the operation instruction is obtained according to the operation instruction, placing data corresponding to the operation object into a data container; and
encapsulating the data container into which the data corresponding to the operation object is already placed into the data packet of the network protocol.

10. The system according to claim 9, wherein the data container comprises a command word and a data content type description, the command word is used to describe the operation instruction, and the data content type description is used to describe a type of the data corresponding to the operation object.

11. The system according to any one of claims 8 to 10, wherein the transmitting the data packet into which the operation object is encapsulated to a television terminal comprises: sending, by invoking a network interface, the data packet into which the operation object is encapsulated to a network port negotiated with the television terminal in advance.

12. The system according to any one of claims 8 to 11, wherein the operation instruction comprises an instruction for copying the operation object to the television terminal.

13. The system according to any one of claims 8 to 12, wherein the data packet is transmitted from the smartphone to the television terminal by means of Wi-Fi or Bluetooth.

14. The system according to any one of claims 8 to 13, wherein the television terminal comprises a set top box; or the television terminal comprises a set top box and an intelligent television terminal.

15. A television terminal for working together with a smartphone, wherein the television terminal comprises an input apparatus, an output apparatus, a memory, and a processor, the memory stores one or more programs, and the processor is configured to invoke the program in the memory to implement the following operations:
displaying a search dialog box on a user interface of the television terminal;
after the search dialog box is displayed on the user interface of the television terminal, receiving a data packet, which is transmitted by the smartphone and into which an operation object is encapsulated, of a network protocol, wherein the operation object is text data selected from the screen of the smartphone;
parsing the data packet of the network protocol; and
performing a corresponding operation on the operation object according to a message obtained after the data packet of the network protocol is parsed;
wherein the performing the corresponding operation on the operation object according to the message obtained after the data packet of the network protocol is parsed comprises:
automatically displaying the text data selected from the screen of the smartphone in the search dialog box in response to receiving and parsing the data packet without receiving a user input on the television terminal for entering the text data selected from the screen of the smartphone.

## Patentansprüche

1. Verfahren zum Übertragen von Daten von einem Smartphone zu einem Fernseher-Endgerät, wobei das Verfahren Folgendes umfasst:
Empfangen einer Benutzereingabe durch eine Fernbedienung des Fernseher-Endgeräts;
Anzeigen eines Suchdialogfelds auf einer Benutzeroberfläche des Fernseher-Endgeräts durch das Fernseher-Endgerät als Reaktion auf die Benutzereingabe;
nachdem das Suchdialogfeld auf der Benutzeroberfläche des Fernseher-Endgeräts angezeigt wird, Empfangen einer Operationsanweisung eines Benutzers durch das Smartphone, wobei es sich bei einem Operationsobjekt, auf das die Operationsanweisung zielt, um aus einem Bildschirm des Smartphone ausgewählte Textdaten handelt;
Einkapseln des Operationsobjekts in ein Datenpaket eines Netzwerkprotokolls durch das Smartphone, nachdem das Operationsobjekt, auf das die Operationsanweisung zielt, gemäß der Operationsanweisung erhalten wird;
Übertragen des Datenpakets, in das das Operationsobjekt eingekapselt wird, zu dem Fernseher-Endgerät durch das Smartphone;
Empfangen des Datenpakets von dem Smartphone durch das Fernseher-Endgerät;
Analysieren des Datenpakets durch das Fernseher-Endgerät; und
Ausführen einer entsprechenden Operation an dem Operationsobjekt durch das Fernseher-Endgerät gemäß einer Nachricht, die erhalten wird, nachdem das Datenpaket analysiert wird;
wobei das Ausführen der entsprechenden Operation an dem Operationsobjekt durch das Fernseher-Endgerät gemäß der Nachricht, die erhalten wird, nachdem das Datenpaket analysiert wird, Folgendes umfasst:
automatisches Anzeigen der aus dem Bildschirm des Smartphone ausgewählten Textdaten in dem Suchdialogfeld durch das Fernseher-Endgerät als Reaktion auf Empfangen und Analysieren des Datenpakets, ohne eine Benutzereingabe auf dem Fernseher-Endgerät zur Eingabe der aus dem Bildschirm des Smartphone ausgewählten Textdaten zu empfangen.

2. Verfahren nach Anspruch 1, wobei das Einkapseln des Operationsobjekts in ein Datenpaket eines Netzwerkprotokolls, nachdem ein Operationsobjekt der Operationsanweisung gemäß der Operationsanweisung erhalten wird, Folgendes umfasst:
nachdem das Operationsobjekt der Operationsanweisung gemäß der Operationsanweisung erhalten wird, Einsetzen von dem Operationsobjekt entsprechenden Daten in einen Datencontainer; und
Einkapseln des Datencontainers, in den die dem Operationsobjekt entsprechenden Daten bereits eingesetzt sind, in das Datenpaket des Netzwerkprotokolls.

3. Verfahren nach Anspruch 2, wobei der Datencontainer ein Befehlswort und eine Dateninhaltstypbeschreibung umfasst, das Befehlswort verwendet wird, um die Operationsanweisung zu beschreiben, und die Dateninhaltstypbeschreibung verwendet wird, um einen Typ der dem Operationsobjekt entsprechenden Daten zu beschreiben.

4. Verfahren nach einem der Ansprüche 1 bis 3, wobei das Übertragen des Datenpakets, in das das Operationsobjekt eingekapselt wird, zu einem Fernseher-Endgerät Folgendes umfasst: Senden des Datenpakets, in das das Operationsobjekt eingekapselt wird, zu einem Netzwerkport, der im Voraus mit dem Fernseher-Endgerät ausgehandelt wird, durch Aufrufen einer Netzwerkschnittstelle.

5. Verfahren nach einem der Ansprüche 1 bis 4, wobei die Operationsanweisung eine Anweisung zum Kopieren des Operationsobjekts auf das Fernseher-Endgerät umfasst.

6. Verfahren nach einem der Ansprüche 1 bis 5, wobei das Datenpaket mittels WiFi oder Bluetooth von dem Smartphone zu dem Fernseher-Endgerät übertragen wird.

7. Verfahren nach einem der Ansprüche 1 bis 5, wobei das Fernseher-Endgerät ein Beistellgerät umfasst; oder das Fernseher-Endgerät ein Beistellgerät und ein intelligentes Fernseher-Endgerät umfasst.

8. System zum Übertragen von Daten von einem Smartphone zu einem Fernseher-Endgerät, umfassend: das Smartphone und das Fernseher-Endgerät, wobei:
das Fernseher-Endgerät ausgelegt ist zum Anzeigen eines Suchdialogfelds auf einer Benutzeroberfläche des Fernseher-Endgeräts;
das Smartphone für Folgendes ausgelegt ist:
nachdem das Suchdialogfeld auf der Benutzeroberfläche des Fernseher-Endgeräts angezeigt wird, Empfangen einer Operationsanweisung eines Benutzers, wobei es sich bei einem Operationsobjekt, auf das die Operationsanweisung zielt, um aus einem Bildschirm des Smartphone ausgewählte Textdaten handelt;
Einkapseln des Operationsobjekts in ein Datenpaket eines Netzwerkprotokolls, nachdem das Operationsobjekt, auf das die Operationsanweisung zielt, gemäß der Operationsanweisung erhalten wird;
Übertragen des Datenpakets, in das das Operationsobjekt eingekapselt wird, zu dem Fernseher-Endgerät;
wobei das Fernseher-Endgerät ferner für Folgendes ausgelegt ist:
Empfangen des Datenpakets von dem Smartphone;
Analysieren des Datenpakets; und
Ausführen einer entsprechenden Operation an dem Operationsobjekt gemäß einer Nachricht, die erhalten wird, nachdem das Datenpaket analysiert wird;
wobei das Ausführen der entsprechenden Operation an dem Operationsobjekt gemäß der Nachricht, die erhalten wird, nachdem das Datenpaket analysiert wird, Folgendes umfasst:
automatisches Anzeigen der aus dem Bildschirm des Smartphone ausgewählten Textdaten in dem Suchdialogfeld als Reaktion auf Empfangen und Analysieren des Datenpakets, ohne eine Benutzereingabe auf dem Fernseher-Endgerät zur Eingabe der aus dem Bildschirm des Smartphone ausgewählten Textdaten zu empfangen.

9. System nach Anspruch 8, wobei das Einkapseln, nachdem ein Operationsobjekt der Operationsanweisung gemäß der Operationsanweisung erhalten wird, des Operationsobjekts in ein Datenpaket eines Netzwerkprotokolls Folgendes umfasst:
nachdem das Operationsobjekt der Operationsanweisung gemäß der Operationsanweisung erhalten wird, Einsetzen von dem Operationsobjekt entsprechenden Daten in einen Datencontainer; und
Einkapseln des Datencontainers, in den die dem Operationsobjekt entsprechenden Daten bereits eingesetzt sind, in das Datenpaket des Netzwerkprotokolls.

10. System nach Anspruch 9, wobei der Datencontainer ein Befehlswort und eine Dateninhaltstypbeschreibung umfasst, das Befehlswort verwendet wird, um die Operationsanweisung zu beschreiben, und die Dateninhaltstypbeschreibung verwendet wird, um einen Typ der dem Operationsobjekt entsprechenden Daten zu beschreiben.

11. System nach einem der Ansprüche 8 bis 10, wobei das Übertragen des Datenpakets, in das das Operationsobjekt eingekapselt wird, zu einem Fernseher-Endgerät Folgendes umfasst: Senden des Datenpakets, in das das Operationsobjekt eingekapselt wird, zu einem Netzwerkport, der im Voraus mit dem Fernseher-Endgerät ausgehandelt wird, durch Aufrufen einer Netzwerkschnittstelle.

12. System nach einem der Ansprüche 8 bis 11, wobei die Operationsanweisung eine Anweisung zum Kopieren des Operationsobjekts auf das Fernseher-Endgerät umfasst.

13. System nach einem der Ansprüche 8 bis 12, wobei das Datenpaket mittels WiFi oder Bluetooth von dem Smartphone zu dem Fernseher-Endgerät übertragen wird.

14. System nach einem der Ansprüche 8 bis 13, wobei das Fernseher-Endgerät ein Beistellgerät umfasst; oder das Fernseher-Endgerät ein Beistellgerät und ein intelligentes Fernseher-Endgerät umfasst.

15. Fernseher-Endgerät zur Zusammenarbeit mit einem Smartphone, wobei das Fernseher-Endgerät eine Eingabevorrichtung, eine Ausgabevorrichtung, einen Speicher und einen Prozessor umfasst, der Speicher ein oder mehrere Programme speichert und der Prozessor ausgelegt ist zum Aufrufen des Programms im Speicher, um die folgenden Operationen zu implementieren:
Anzeigen eines Suchdialogfelds auf einer Benutzeroberfläche des Fernseher-Endgeräts;
nachdem das Suchdialogfeld auf der Benutzeroberfläche des Fernseher-Endgeräts angezeigt wird, Empfangen eines Datenpakets, das durch das Smartphone übertragen wird und in das ein Operationsobjekt eingekapselt wird, eines Netzwerkprotokolls, wobei es sich bei dem Operationsobjekt um aus dem Bildschirm des Smartphone ausgewählte Textdaten handelt;
Analysieren des Datenpakets des Netzwerkprotokolls; und
Ausführen einer entsprechenden Operation an dem Operationsobjekt gemäß einer Nachricht, die erhalten wird, nachdem das Datenpaket des Netzwerkprotokolls analysiert wird;
wobei das Ausführen der entsprechenden Operation an dem Operationsobjekt gemäß der Nachricht, die erhalten wird, nachdem das Datenpaket des Netzwerkprotokolls analysiert wird, Folgendes umfasst:
automatisches Anzeigen der aus dem Bildschirm des Smartphone ausgewählten Textdaten in dem Suchdialogfeld als Reaktion auf Empfangen und Analysieren des Datenpakets, ohne eine Benutzereingabe auf dem Fernseher-Endgerät zur Eingabe der aus dem Bildschirm des Smartphone ausgewählten Textdaten zu empfangen.

## Revendications

1. Procédé de transmission de données d'un smartphone à un terminal de télévision, le procédé comprenant :
la réception, par une télécommande du terminal de télévision, d'une entrée utilisateur ;
l'affichage, par le terminal de télévision en réponse à l'entrée de l'utilisateur, d'une boîte de dialogue de recherche sur une interface utilisateur du terminal de télévision ;
après l'affichage de la boîte de dialogue de recherche sur l'interface utilisateur du terminal de télévision, la réception, par le smartphone, d'une instruction d'opération d'un utilisateur, un objet d'opération auquel l'instruction d'opération est destinée étant des données textuelles sélectionnées sur un écran du smartphone ;
l'encapsulation, par le smartphone, après que l'objet d'opération auquel l'instruction d'opération est destinée a été obtenu conformément à l'instruction d'opération, de l'objet d'opération dans un paquet de données d'un protocole de réseau ;
la transmission, par le smartphone, du paquet de données dans lequel l'objet d'opération est encapsulé au terminal de télévision ;
la réception, par le terminal de télévision, du paquet de données provenant du smartphone ;
l'analyse, par le terminal de télévision, du paquet de données ; et
la réalisation, par le terminal de télévision, d'une opération correspondante sur l'objet d'opération en fonction d'un message obtenu après l'analyse du paquet de données ;
la réalisation, par le terminal de télévision, de l'opération correspondante sur l'objet d'opération en fonction du message obtenu après l'analyse du paquet de données comprenant :
l'affichage automatique, par le terminal de télévision, des données textuelles sélectionnées sur l'écran du smartphone dans la boîte de dialogue de recherche en réponse à la réception et à l'analyse du paquet de données sans recevoir d'entrée de l'utilisateur sur le terminal de télévision pour saisir les données textuelles sélectionnées sur l'écran du smartphone.

2. Procédé selon la revendication 1, l'encapsulation, après l'obtention d'un objet d'opération de l'instruction d'opération conformément à l'instruction d'opération, de l'objet d'opération dans un paquet de données d'un protocole de réseau comprenant :
après l'obtention de l'objet d'opération de l'instruction d'opération conformément à l'instruction d'opération, le placement des données correspondant à l'objet d'opération dans un conteneur de données ; et
l'encapsulation du conteneur de données dans lequel les données correspondant à l'objet d'opération sont déjà placées dans le paquet de données du protocole de réseau.

3. Procédé selon la revendication 2, le conteneur de données comprenant un mot de commande et une description de type de contenu de données, le mot de commande étant utilisé pour décrire l'instruction d'opération, et la description de type de contenu de données étant utilisée pour décrire un type des données correspondant à l'objet d'opération.

4. Procédé selon l'une quelconque des revendications 1 à 3, la transmission du paquet de données dans lequel l'objet d'opération est encapsulé à un terminal de télévision comprenant : l'envoi, par appel d'une interface de réseau, du paquet de données dans lequel l'objet d'opération est encapsulé à un port de réseau négocié au préalable avec le terminal de télévision.

5. Procédé selon l'une quelconque des revendications 1 à 4, l'instruction d'opération comprenant une instruction de copie de l'objet d'opération vers le terminal de télévision.

6. Procédé selon l'une quelconque des revendications 1 à 5, le paquet de données étant transmis du smartphone au terminal de télévision par Wi-Fi ou Bluetooth.

7. Procédé selon l'une quelconque des revendications 1 à 5, le terminal de télévision comprenant un boîtier décodeur ; ou le terminal de télévision comprenant un boîtier décodeur et un terminal de télévision intelligent.

8. Système de transmission de données d'un smartphone à un terminal de télévision, comprenant : le smartphone et le terminal de télévision,
le terminal de télévision étant configuré pour : afficher une boîte de dialogue de recherche sur une interface utilisateur du terminal de télévision ;
le smartphone étant configuré pour :
après l'affichage de la boîte de dialogue de recherche sur l'interface utilisateur du terminal de télévision, recevoir une instruction d'opération d'un utilisateur, un objet d'opération auquel l'instruction d'opération est destinée étant des données textuelles sélectionnées sur un écran du smartphone ;
encapsuler, après que l'objet d'opération auquel l'instruction d'opération est destinée a été obtenu conformément à l'instruction d'opération, l'objet d'opération dans un paquet de données d'un protocole de réseau ;
transmettre le paquet de données dans lequel l'objet d'opération est encapsulé au terminal de télévision ;
le terminal de télévision étant en outre configuré pour
recevoir le paquet de données du smartphone ;
analyser le paquet de données ; et
réaliser une opération correspondante sur l'objet d'opération en fonction d'un message obtenu après l'analyse du paquet de données ;
la réalisation de l'opération correspondante sur l'objet d'opération en fonction du message obtenu après l'analyse du paquet de données comprenant :
l'affichage automatique des données textuelles sélectionnées sur l'écran du smartphone dans la boîte de dialogue de recherche en réponse à la réception et à l'analyse du paquet de données sans recevoir d'entrée de l'utilisateur sur le terminal de télévision pour saisir les données textuelles sélectionnées sur l'écran du smartphone.

9. Système selon la revendication 8, l'encapsulation, après l'obtention d'un objet d'opération de l'instruction d'opération conformément à l'instruction d'opération, de l'objet d'opération dans un paquet de données d'un protocole de réseau comprenant :
après l'obtention de l'objet d'opération de l'instruction d'opération conformément à l'instruction d'opération, le placement des données correspondant à l'objet d'opération dans un conteneur de données ; et
l'encapsulation du conteneur de données dans lequel les données correspondant à l'objet d'opération sont déjà placées dans le paquet de données du protocole de réseau.

10. Système selon la revendication 9, le conteneur de données comprenant un mot de commande et une description de type de contenu de données, le mot de commande étant utilisé pour décrire l'instruction d'opération et la description de type de contenu de données étant utilisée pour décrire un type des données correspondant à l'objet d'opération.

11. Système selon l'une quelconque des revendications 8 à 10, la transmission du paquet de données dans lequel l'objet d'opération est encapsulé à un terminal de télévision comprenant : l'envoi, par appel d'une interface de réseau, du paquet de données dans lequel l'objet d'opération est encapsulé à un port de réseau négocié au préalable avec le terminal de télévision.

12. Système selon l'une quelconque des revendications 8 à 11, l'instruction d'opération comprenant une instruction de copie de l'objet d'opération vers le terminal de télévision.

13. Système selon l'une quelconque des revendications 8 à 12, le paquet de données étant transmis du smartphone au terminal de télévision par Wi-Fi ou Bluetooth.

14. Système selon l'une quelconque des revendications 8 à 13, le terminal de télévision comprenant un boîtier décodeur ; ou le terminal de télévision comprenant un boîtier décodeur et un terminal de télévision intelligent.

15. Terminal de télévision destiné à fonctionner avec un smartphone, le terminal de télévision comprenant un appareil d'entrée, un appareil de sortie, une mémoire et un processeur, la mémoire stockant un ou plusieurs programmes, et le processeur étant configuré pour appeler le programme dans la mémoire afin de mettre en oeuvre les opérations suivantes :
affichage d'une boîte de dialogue de recherche sur une interface utilisateur du terminal de télévision ;
après l'affichage de la boîte de dialogue de recherche sur l'interface utilisateur du terminal de télévision, réception d'un paquet de données, transmis par le smartphone et dans lequel un objet d'opération est encapsulé, d'un protocole de réseau, l'objet d'opération étant des données textuelles sélectionnées à partir de l'écran du smartphone ;
analyse du paquet de données du protocole réseau ; et
réalisation d'une opération correspondante sur l'objet d'opération en fonction d'un message obtenu après l'analyse du paquet de données du protocole de réseau ;
la réalisation de l'opération correspondante sur l'objet d'opération en fonction du message obtenu après l'analyse du paquet de données du protocole de réseau comprenant :
l'affichage automatique des données textuelles sélectionnées sur l'écran du smartphone dans la boîte de dialogue de recherche en réponse à la réception et à l'analyse du paquet de données sans recevoir d'entrée de l'utilisateur sur le terminal de télévision pour saisir les données textuelles sélectionnées sur l'écran du smartphone.
